# EUROPEAN PATENT APPLICATION

(11) **EP 1 845 248 A1**
(43) Date of publication of application: **17.10.2007**
(21) Application number: 06713089.8
(22) Date of filing: 31.01.2006
(51) Int. Cl.: F02D 29/02

(54) **CONTROL APPARATUS FOR INTERNAL COMBUSTION ENGINE AND AUTOMOBILE WITH THE CONTROL APPARATUS**

(30) Priority: 03.02.2005 JP 2005027384
(71) Applicant: Toyota Jidosha Kabushiki Kaisha, Toyota-shi, Aichi 471-8571 (JP)
(72) Inventor: SUGAI, Shinichi, , Toyota-shi, Aichi, 4718571 (JP); YAMAGUCHI, Katsuhiko, , Toyota-shi, Aichi, 4718571 (JP)
(74) Representative: TBK-Patent
(86) International application number: PCT/JP2006/301946
(87) International publication number: WO 2006/082954

(57) **Abstract**

In stopping an internal combustion engine, an engine stop is controlled such that, among a plurality of cylinders of the internal combustion engine, a cylinder arranged at a position close to a transmission halts in a compression stroke. More specifically, in stopping an internal combustion engine, at a point when the rotation speed of the internal combustion engine becomes less than a prescribed value (ST3), the remaining rotation angle required for a cylinder #4 close to a transmission to halt in a compression stroke is calculated (ST5). Based on the calculated value of the remaining rotation angle, a crankshaft of the internal combustion engine is forcibly driven by controlling the driving of an electric motor (for example, motor generator) (ST6), so that cylinder #4 closest to the transmission is stopped in a compression stroke.

## Description

### Technical Field

The present invention relates to a control apparatus for an internal combustion engine, and more specifically to a control apparatus controlling a stop position of an internal combustion engine and an automobile with the control apparatus.

### Background Art

Recently, in view of environmental conservation, for the purpose of enhancing fuel economy and reducing emissions, an automobile provided with an internal combustion engine (also referred to as an engine) employs idling stop control to stop the engine by stopping fuel supply to an engine combustion chamber (fuel cut) when a prescribed condition is met, for example, when the automobile stops at a red light at an intersection.

In addition, when a prescribed engine start condition is met in the state in which the engine is stopped by this idling stop, the engine is restarted by an electric motor such as a starter motor. Vehicles employing such idling stop control include, so-called eco-run cars and hybrid cars provided with an engine and an electric motor such as a motor generator as a driving source.

In the idling stop control, in order to obtain good startability during the starting of an engine, it is effective to control the position at the time of engine stop (for example, crank angle). Furthermore, not only in the idling stop control but also in the normal engine starting, it is important to control the engine stop position to realize good startability. Moreover, in hybrid cars, since engine stop and restart frequently take place during travel, it is also important to control the engine stop position during travel in order to enhance drivability.

In a method of controlling a stop of an engine, driving of an electric motor such as a motor generator is controlled during a stop of the engine thereby stopping a crankshaft at the time of engine stop at a target angle (for example, a position immediately before a piston reaches the compression top dead center) to decrease driving torque at the time of starting (see, for example, Japanese Patent Laying-Open No. 2004-068632). In another method, during a stop of an engine, for a cylinder in a compression stroke and an expansion stroke at the time of engine stop, an air-intake amount is increased thereby applying resistance to the movement of a piston to the top dead center (see, for example, Japanese Patent Laying-Open No. 2004-124754). Furthermore, in the engine stop control, fresh air is taken in to a cylinder thereby stopping a crankshaft at a desired position (see, for example, Japanese Patent Laying-Open No. 2004-162707).

Here, as in the techniques disclosed in Japanese Patent Laying-Open No. 2004-068632 and the like as described above, the control that causes a cylinder to stop in a compression stroke at the time of a stop of an engine allows driving torque in starting to be decreased. However, a cylinder at which position of multi-cylinder should be stopped in a compression stroke is not managed. Therefore, in some positions of the cylinder which stops in a compression stroke, compression vibration at the time of cranking in the next starting is increased.

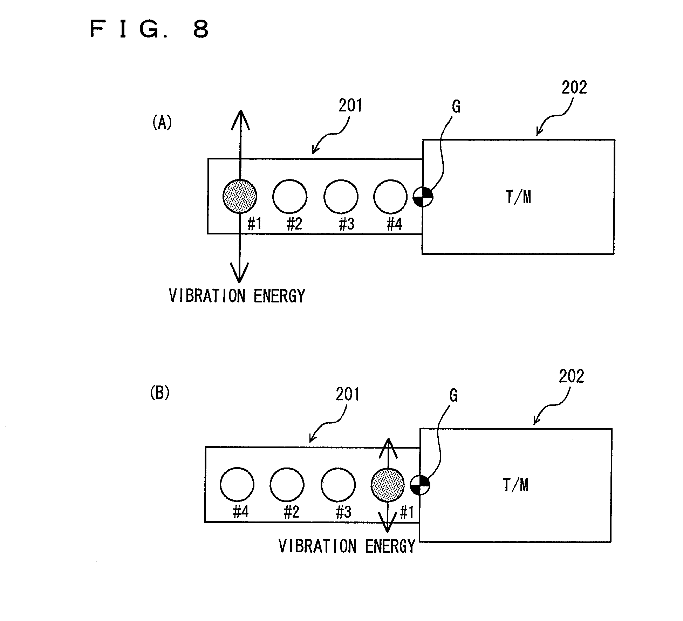

For example, as shown in Fig. 8(A), if an engine 201 stops when a cylinder #1 arranged at a position far from a transmission 202 reaches a compression stroke, the compression vibration at the time of cranking in the next starting is increased. More specifically, engine 201 and transmission 202 are often integrally formed, and the center of gravity G as a whole is often positioned between engine 201 and transmission 202 or at the transmission 202 side. Therefore, cylinder #1 arranged at a position far from transmission 202 is positioned far from the center of gravity G, so that vibration energy increases when cylinder #1 is started from a compression stroke at the time of cranking start.

On the other hand, as shown in Fig. 8(B), a cylinder #4 positioned close to transmission 202 is also positioned close to the center of gravity G, so that the vibration energy at the time of restarting is small, if engine 201 stops when cylinder #4 reaches a compression stroke. Therefore, in order to suppress the compression vibration at the time of cranking in starting an engine, a cylinder at a position close to a transmission should be stopped in a compression stroke.

### Disclosure of the Invention

The present invention is made to solve the aforementioned problem. An object of the present invention is to provide a control apparatus for an internal combustion engine, in which in stopping the internal combustion engine, a cylinder positioned close to a transmission can be set as a cylinder which halts in a compression stroke, and compression vibration at the time of cranking in the next starting can be reduced, and to provide an automobile with the control apparatus having such characteristics.

The present invention provides a control apparatus for controlling a multi-cylinder internal combustion engine having a transmission coupled thereto, characterized by including a stop control unit controlling an engine stop such that, among a plurality of cylinders of the internal combustion engine, a cylinder arranged at a position close to the transmission halts in a compression stroke, in stopping the internal combustion engine.

In accordance with the present invention, in stopping an internal combustion engine, a cylinder arranged at a position close to the center of gravity of the internal combustion engine and the transmission as a whole can be set as a cylinder to be stopped in a compression stroke, so that the compression vibration at the time of cranking in the next starting can be reduced.

As a specific configuration of the stop control unit as described above, in stopping the internal combustion engine, the cylinder arranged at a position close to the transmission is caused to stop in a compression stroke by forcibly driving a crankshaft of the internal combustion engine with an electric motor. More specifically, a remaining rotation angle required for the cylinder arranged at a position close to the transmission to halt in a compression stroke is calculated at a point when rotation speed of the internal combustion engine becomes less than a prescribed value, and driving of the electric motor is controlled based on a calculated value of the remaining rotation angle.

In the present invention, in addition to the stop control unit as described above, a start control unit may be provided which controls ignition of the internal combustion engine such that ignition is started from the cylinder arranged at a position close to the transmission, in starting the internal combustion engine. In this manner, a cylinder arranged at a position close to the transmission is set as a cylinder initially subjected to ignition at the starting of the engine, so that the vibration at the time of initial explosion can also be reduced.

In the present invention, in starting the internal combustion engine, a timing at which a throttle valve arranged in an intake passage of the internal combustion engine is opened may be controlled such that fresh air is introduced into the cylinder arranged at a position close to the transmission. By employing this configuration, fresh air in the amount required for idling operation or the like is introduced into a cylinder (a cylinder closest to the transmission) initially subjected to ignition at the time of the starting of the engine, so that in addition to the effect of vibration reduction at the initial explosion as described above, better engine startability can be achieved.

Here, hybrid cars have the operation state unique to hybrid cars in which the engine is restarted during travel only with the driving force of the electric motor such as a motor generator (in engine stop state), and it is requested that the amount of pressing of the accelerator at the time of the restarting, that is, the driver requesting driving force should be achieved. Then, the present invention employs such a configuration in that a timing at which a throttle valve is opened is controlled such that, in restarting the engine that stops during travel, the amount of air (the amount of fresh air) corresponding to the driving force requested by a driver is introduced into a cylinder (a cylinder close to the transmission) initially subjected to ignition at the time of restarting of the engine. Then, by employing such a configuration, while the driving force requested by the driver as described above is achieved at the time of restarting the engine, the vibration at the time of initial explosion can be suppressed. As a result, drivability during travel can be further improved.

An automobile in accordance with the present invention includes the control apparatus for an internal combustion engine having the characteristics described above. An engine stop is controlled such that, among a plurality of cylinders of the internal combustion engine, a cylinder arranged at a position close to the transmission stops in a compression stroke when an internal combustion engine stop condition is met. Therefore, the compression vibration at the time of cranking in starting can be reduced.

It is noted that automobiles to which the present invention is applied include, for example, hybrid cars, eco-run cars, or normal automobiles provided only with an engine as a driving force and not performing idling stop control.

In accordance with the present invention, in stopping the internal combustion engine, the cylinder arranged at a position close to the transmission can be stopped in a compression stroke, so that the compression vibration at the time of cranking in the next starting can be reduced.

### Brief Description of the Drawings

Fig. 1 is a schematic configuration diagram showing an exemplary automobile to which the present invention is applied.
Fig. 2 is a schematic configuration diagram of an engine installed in the automobile in Fig. 1.
Fig. 3 is a flowchart illustrating exemplary engine stop control performed by ECU.
Fig. 4 illustrates a stroke of each cylinder at the time of engine stop.
Fig. 5 is a flowchart illustrating exemplary engine start control performed by ECU.
Fig. 6 is a diagram showing strokes and fuel injection and ignition timings for each cylinder at the time of engine start.
Fig. 7 is a schematic configuration diagram showing another exemplary automobile to which the present invention is applied.
Fig. 8 is a diagram schematically showing the problem of compression vibration at the time of cranking during engine start.

### Best Modes for Carrying Out the Invention

In the following, embodiments of the present invention will be described with reference to the figures. In the following description, the same parts will be denoted with the same reference characters. Their designations and functions are also the same. Therefore, detailed description thereof will not be repeated.

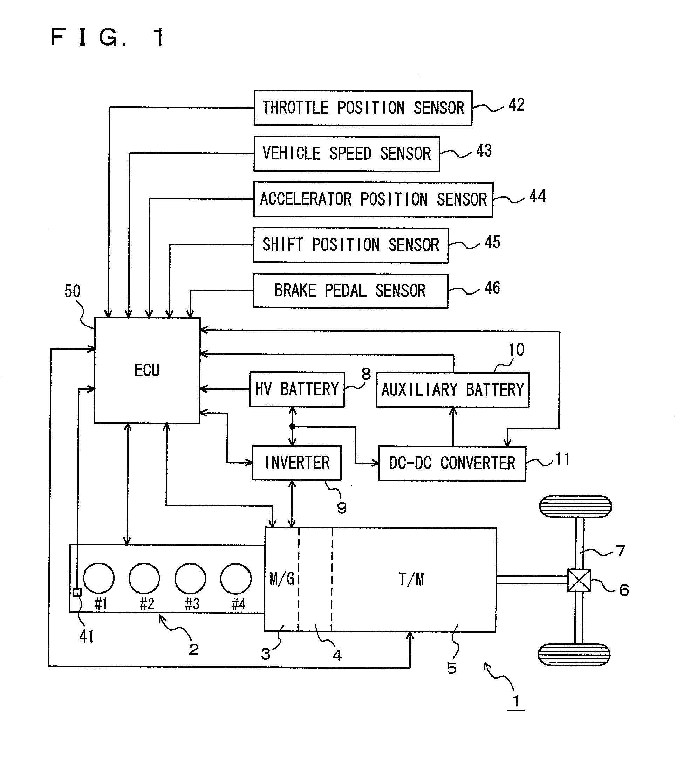

First, a schematic configuration of an automobile to which the present invention is applied will be described with reference to Fig. 1.

An automobile 1 shown in Fig. 1 is a hybrid car including an engine 2 as an internal combustion engine, a motor generator (M/G) 3 having functions of a motor and a generator, a planetary gear train (power combining and distributing mechanism) 4 mechanically combining and distributing a driving force of engine 2 and motor generator 3 for output to a transmission (T/M) 5, a differential gear coupling an output shaft of transmission 5 to a driving shaft 7 of automobile 1, an HV battery 8 supplying and recovering power used for driving of the automobile, an inverter 9 making a conversion between direct current of HV battery 8 and alternating current of motor generator 3, an auxiliary battery 10 supplying and recovering power used except for driving of the automobile, a DC-DC converter 11, and an ECU (Electronic Control Unit) 50.

It is noted that engine 2 and transmission 5 (including motor generator 3 and planetary gear train 4) are integrally formed.

Engine 2 is an in-line four-cylinder gasoline engine including four cylinders #1-#4 arranged along the longitudinal direction of automobile 1 (north-south layout or longitudinal location). These four cylinders #1-#4 are arranged in order of increasing distance from transmission 5, that is, in the order of cylinder #4, cylinder #3, cylinder #2, cylinder #1.

Engine 2 includes a piston 20 forming a combustion chamber 2a and a crankshaft 25 serving as an output shaft. Piston 20 is coupled to crankshaft 25 with a connecting rod 26 interposed so that the reciprocating motion of piston 20 is converted to rotation of crankshaft 25 by connecting rod 26.

A signal rotor 27 having a plurality of protrusions 27a...27a on the outer circumference thereof is attached on crankshaft 25. A crank position sensor 41 is arranged in the vicinity of the side of signal rotor 27. Crank position sensor 41 outputs a pulse-shaped signal corresponding to protrusion 27a of signal rotor 27 when crankshaft 25 rotates.

An ignition plug 31 is arranged in combustion chamber 2a of engine 2. An ignition timing of ignition plug 31 is controlled by ECU 50.

An intake passage 21 and an exhaust passage 22 are connected to combustion chamber 2a of engine 2. An intake valve 23 is provided between intake passage 21 and combustion chamber 2a. This intake valve 23 is driven to open and close so that intake passage 21 communicates with or is blocked from combustion chamber 2a. In addition, an exhaust valve 24 is provided between exhaust passage 22 and combustion chamber 2a. This exhaust valve 24 is driven to open and close so that exhaust passage 22 communicates with or is blocked from combustion chamber 2a. The opening and closing of intake valve 23 and exhaust valve 24 are driven by each rotation of an intake cam shaft and an exhaust cam shaft (neither shown) to which rotation of crankshaft 25 is transmitted.

An electronically-controlled throttle valve 32 is arranged in intake passage 21 to adjust the amount of intake air to engine 2. Throttle valve 32 is driven by a throttle motor 33. The degree of opening of throttle valve 32 is detected by a throttle position sensor 42. Output signals from throttle position sensor 42 and crank position sensor 41 described above are input to ECU 50 (see Fig. 1).

Then, an injector for fuel injection (fuel injection valve) 34 is arranged at intake passage 21. Injector 34 is supplied with fuel at a prescribed pressure from a fuel tank by a fuel pump (neither shown) so that the fuel is injected to intake passage 21. This injected fuel is mixed into intake air, resulting in a gas mixture which is then introduced into combustion chamber 2a of engine 2. The gas mixture (fuel + air) introduced into combustion chamber 2a is ignited by ignition plug 3 and burned. The combustion of the gas mixture in combustion chamber 2a causes piston 20 to reciprocate thereby rotating crankshaft 25.

On the other hand, motor generator 3 is, for example, a three-phase alternating current synchronous-type motor generator. When motor generator 3 functions as a motor, it receives power supply from HV battery 8 and transmits the produced torque to driving shaft 7 as a driving force to cause automobile 1 to travel. In addition, at the time of deceleration or braking of automobile 1, motor generator 3 functions as a generator to produce regenerative power. Furthermore, motor generator 3 also functions as a starter motor in starting engine 2. The torque produced in motor generator 3 is approximately in proportion to the magnitude of current supplied to motor generator 3. The rotation speed of motor generator 3 is controlled by a frequency of alternating current.

When motor generator 3 functions as a motor, HV battery 8 supplies power to motor generator 3 through inverter 9. On the other hand, when motor generator 3 functions as a generator, power is recovered from motor generator 3 through inverter 9.

Inverter 9 is provided between motor generator 3 and HV battery 8 to convert direct current of HV battery 8 into three-phase alternating current to be supplied to motor generator 3 and also to convert three-phase alternating current generated by motor generator 3 into direct current to be supplied to HV battery 8.

Auxiliary battery 10 is charged by a DC-DC converter 11 connected to the direct current side of inverter 9. The power supply targets of auxiliary battery 10 include lighting, audio equipment, an air-conditioner compressor, ECU 50, and the like.

ECU 50 includes CPU, ROM, RAM, backup RAM, and the like, although not shown. ROM stores a variety of control programs, maps referred to when such a variety of control programs are executed, and the like. CPU executes a variety of operation processing based on a variety of control programs and maps stored in ROM. Furthermore, RAM is a memory in which an operation result at CPU, data input from each sensor, and the like are temporarily stored. The backup RAM is a non-volatile memory in which, for example, data to be saved at the time of a stop of engine 2 and the like is stored.

Then, ECU 50 calculates torque requested by a driver, a required engine output, motor torque, and the like to control the driving force, based on outputs from crank position sensor 41, throttle position sensor 42, a vehicle speed sensor 43, an accelerator position sensor 44, a shift position sensor 45, a brake pedal sensor 46, and a variety of not-shown sensors such as a water temperature sensor, an air flow meter, an intake temperature sensor, and an O₂ sensor. Furthermore, ECU 50 performs control of motor generator 3, selection of a driving force source, that is, switching control between engine 2 and motor generator 3, control of torque distribution, if engine 2 and motor generator 3 are used in combination, and in addition, a variety of control of engine 2 including the engine stop control and start control described below. It is noted that ECU 50 also performs monitoring of the charging state and temperature of HV battery 8 and auxiliary battery 10, and the like.

### - Engine Stop Control -

Next, the engine stop control performed by ECU 50 will be described.

First, at the time of a stop of engine 2, as described above, if engine 2 stops when, of four cylinders #1-#4 of engine 2, cylinder #1 arranged at a position far from transmission 5 reaches a compression stroke, the compression vibration at the time of cranking at the next starting (re-starting) increases (see Fig. 8(A)). On the other hand, if engine 2 stops when cylinder #4 arranged at a position close to transmission 5 reaches a compression stroke, the compression vibration at the time of cranking at the next starting (re-starting) decreases (see Fig. 8(B)).

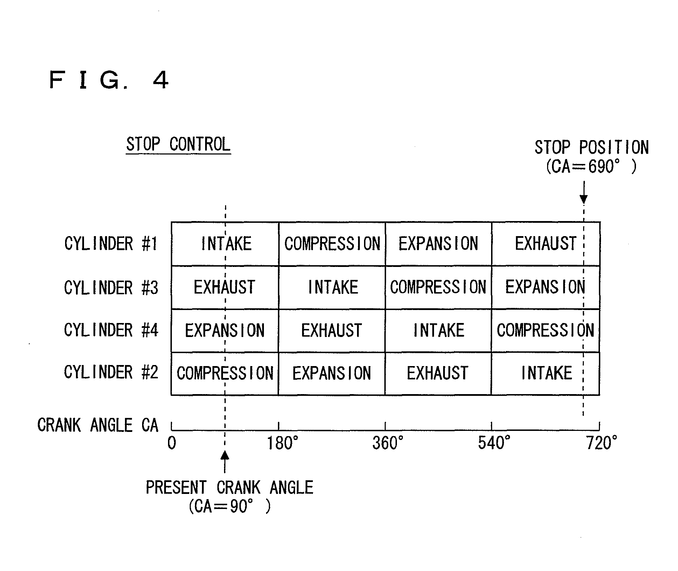

In view of the foregoing description, it is required that cylinder #4 close to transmission 5 should be stopped in a compression stroke in order to suppress the compression vibration at the time of cranking at the engine start. Then, in this embodiment, in stopping engine 2, as shown in Fig. 4, control is performed such that, of four cylinders #1-#4 of engine 2, cylinder #4 arranged at a position closest to transmission 5 stops in a compression stroke.

Here, the stop position of cylinder #4 in a compression stroke is preferably controlled such that piston 20 of this cylinder #4 stops at a position immediately before TDC (Top Dead Center) of a compression stroke (for example, at a position where piston 20 is 30° before TDC).

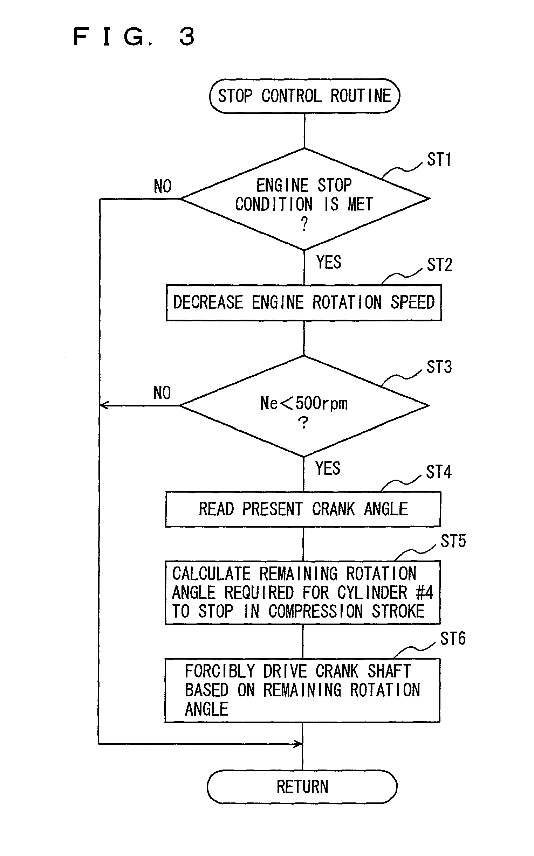

A specific example of engine stop control performed by ECU 50 will now be described with reference to the flowchart illustrated in Fig. 3. This stop control routine is repeatedly executed at prescribed time intervals (for example, 12 msec).

First, at step ST1, it is determined whether or not a prescribed engine stop condition is met, and if the determination is positive (YES), that is, if the engine stop condition is met, the process proceeds to step ST2. On the other hand, if the determination at step ST1 is negative (NO), that is, if the engine stop condition is not met, this stop control routine is ended tentatively.

Here, in this example, the engine stop condition includes, for example, "an idling stop condition", "a condition that engine 2 is stopped during vehicle travel", "ignition switch (not shown) OFF", and the like.

It is noted that if a transmission installed in an automobile is an automatic transmission, the idling stop condition includes that the vehicle speed based on a vehicle speed sensing signal from vehicle speed sensor 43 is "0", that the shift lever position based on shift position sensor 45 is a neutral position, that a pressing operation on a brake pedal is performed (brake pedal sensor 46 is ON), and the like. On the other hand, in the case of a manual transmission, the idling stop condition includes, for example, that the vehicle speed is "0", that the shift lever position is a neutral position, that a clutch pedal is pressed, and the like.

At step ST2, while fuel cut is made on engine 2, motor generator 3 is driven to decrease the rotation speed of engine 2. Here, the driving force of motor generator 3 provides negative torque to crankshaft 25 of engine 2.

At step ST3, it is determined whether or not the present engine rotation speed Ne obtained from an output of crank position sensor 41 is reduced to less than 500 rpm, and at a point when the engine rotation speed becomes less than 500 rpm, the process proceeds to step ST4.

At step ST4, the present rotation angle of crankshaft 25 (crank angle CA) is read from the output of crank position sensor 41. At step ST5, the remaining rotation angle for cylinder #4 of engine 2 to stop in a compression stroke is calculated based on the read crank angle CA and a target value of a stop position of engine 2, that is, a position where cylinder #4 reaches a compression stroke (for example, a position 30° before TDC). Specifically, for example, as shown in Fig. 4, where the present crank angle CA is 90° and piston 20 of cylinder #4 is to be stopped at 30° before TDC in a compression stroke (crank angle 690°), the calculated value of the remaining rotation angle is 600°.

Next, at step ST6, engine 2 is stopped by forcibly driving crankshaft 25 with motor generator (M/G) 3 and in addition, by performing feedback control on motor generator 3 with a target value set to the above-noted calculated value of the remaining rotation angle. Such feedback control allows cylinder #4 of engine 2 to stop in a compression stroke. It is noted that, in this feedback control, the rotation of crankshaft 25 may be assisted (provided with positive torque) by motor generator (M/G) 3 in order to stop cylinder #4 in a compression stroke. Then, upon completion of the control at step ST6, the stop control routine is ended tentatively.

Here, in the stop control as described above, the remaining rotation angle is calculated at a point when the engine rotation speed Ne becomes less than 500 rpm. However, the present invention is not limited thereto. In short, the engine rotation speed Ne at which the calculation of the remaining rotation angle is started may be a value other than 500 rpm as long as it is according to the processing capacity of CPU of ECU 50, that is, as long as ECU 50 can adequately recognize the present crank angle CA or the piston position (stroke) for each cylinder. However, when the engine rotation speed Ne at which the calculation of the remaining rotation angle is started is set at an extremely low value, the control time required to stop cylinder #4 in a compression stroke is undesirably long.

### - Engine Start Control -

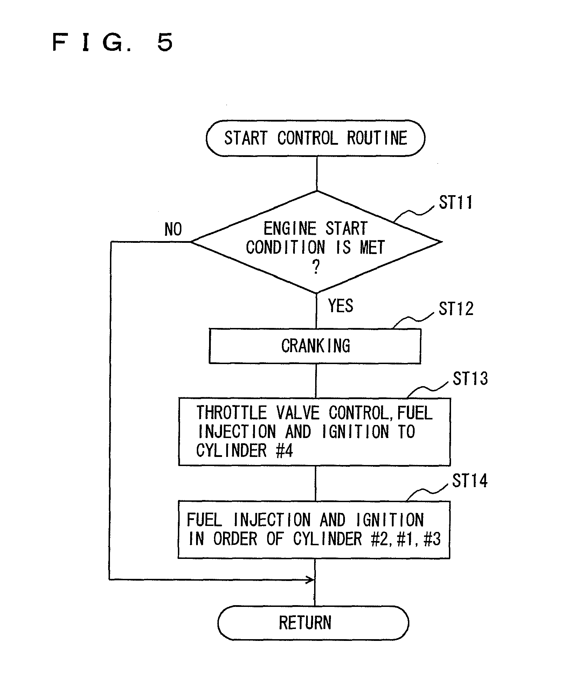

A specific example of the engine start control performed by ECU 50 will now be described with reference to the flowchart illustrated in Fig. 5.

First, at step ST11, it is determined whether or not an engine start condition is met, and if the determination is positive (YES), that is, if the engine start condition is met, the process proceeds to step ST12.

Here, in this example, the engine start condition includes, for example, "a condition that engine 2 is started during vehicle travel (travel only by the driving force of motor generator 3)", "ignition switch ON", and the like.

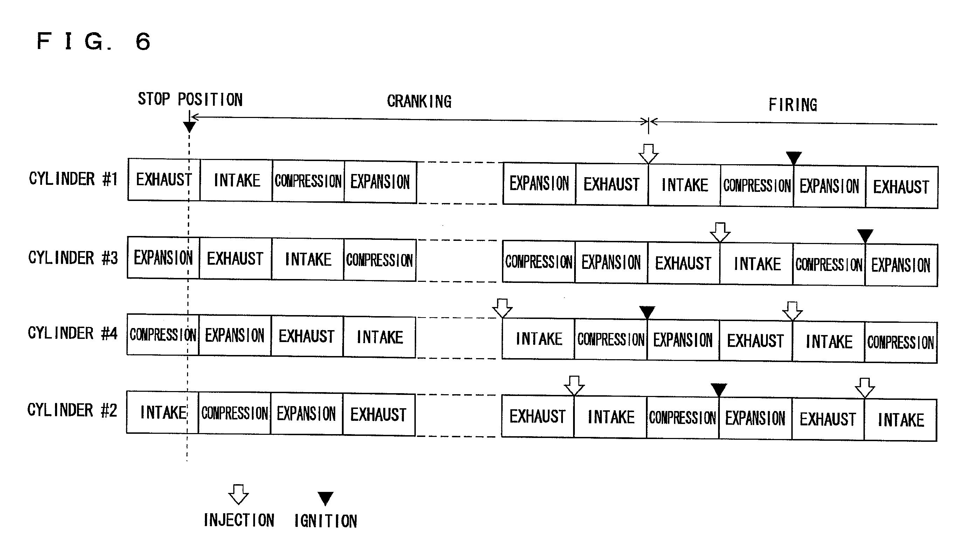

At step ST12, the driving of motor generator 3 is controlled so that engine 2 is cranked. In this start of cranking, as shown in Fig. 6, among cylinders #1-#4 of engine 2, cylinder #4 at a position closest to transmission 5 is started from a compression stroke.

At step ST13, during cranking by motor generator 3 as described above, the timing at which throttle valve 32 is opened is controlled by controlling throttle motor 33 such that fresh air comes into cylinder #4 of engine 2. In addition, fuel injection and ignition in cylinder #4 is performed (see Fig. 6), and then fuel injection and ignition is performed in the order of cylinder #2→cylinder #1→#3 (step ST14). Thereafter, this start control routine is ended.

According to the embodiment above, in stopping engine 2, among cylinders #1-#4 of engine 2, cylinder #4 arranged at a position closest to transmission 5, that is, cylinder #4 positioned close to the center of gravity of engine 2 and transmission 5 (including motor generator 3 and planetary gear train 4) as a whole, can be stopped in a compression stroke, so that the compression vibration at the time of cranking in the next starting can be reduced. Moreover, cylinder #4 arranged at a position closest to transmission 5 is set as a cylinder initially subjected to fuel injection and ignition at the time of starting of engine 2, so that vibration in the initial explosion can also be reduced. In addition, fresh air is introduced to cylinder #4 initially subjected to ignition in the amount required for the operation (for example, the amount required for the idling operation), so that good engine startability can be obtained.

Here, automobile 1 in this embodiment, which is a hybrid car, has an operation state unique to hybrid cars in which the engine is restarted during travel (in the engine stop state) only with the driving force of motor generator 3. Thus, it is requested that the amount of pressing of an accelerator at a point of time of the restarting, that is, the driving force requested by the driver, should be achieved. In this embodiment, during cranking by motor generator 3, at step ST 13 in the flowchart of Fig. 5, the timing at which throttle valve 32 is opened is adjusted by controlling throttle motor 33, so that the amount of air (the amount of fresh air) according to the driving force requested by the driver can be introduced into cylinder #4 closest to transmission 5. Therefore, the initial explosion vibration can be suppressed while the aforementioned driving force requested by the driver is achieved at the time of restarting of engine 2. As a result, even if the stop and restart of engine 2 is frequently repeated during travel, good drivability can be assured.

It is noted that although, in the embodiment above, the present invention is applied to a hybrid car provided with a motor generator having both functions of a motor and a generator, by way of example, the present invention is not limited thereto and may be applied to a hybrid car provided with a motor and a generator separately.

### <Another Embodiment>

Another embodiment of the present invention will now be described. In the embodiment above, the present invention is applied to a hybrid car provided with an engine and a motor generator as a driving source, by way of illustration. In this embodiment, the present invention is applied to an eco-run car provided with only an engine as a driving source, by way of example.

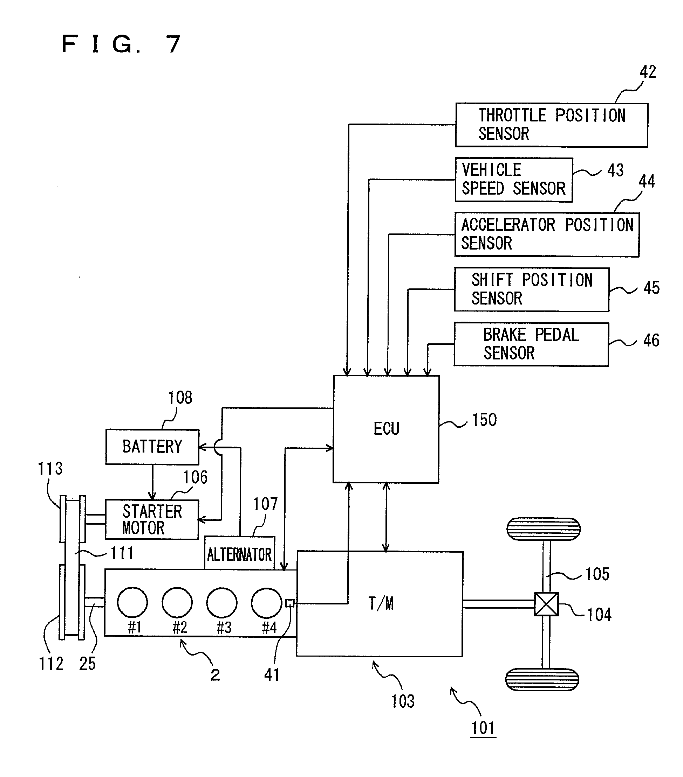

An automobile 101 in this embodiment includes, as shown in Fig. 7, engine 2 as an internal combustion engine, a transmission 103 coupled to engine 2, a differential gear 104 coupling the output shaft of transmission 103 to a driving shaft 105 of automobile 101, a starter motor (electric motor) 106, an alternator (generator) 107, a battery 108, and an ECU 150. It is noted that engine 2 and transmission 103 are integrally formed.

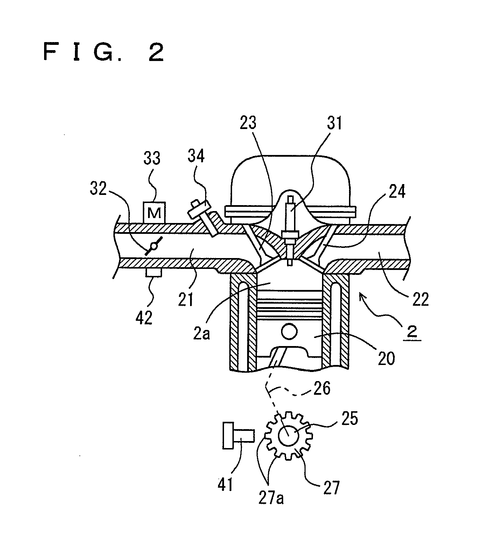

Engine 2 is a four-cylinder gasoline engine (in-line engine) in which four cylinders #1-#4 are arranged along the longitudinal direction of automobile 101 (north-south layout). These four cylinders #1-#4 are arranged in the order of increasing distance from transmission 103, that is, in the order of cylinder #4, cylinder #3, cylinder #2, cylinder #1. Engine 2 is provided with crank position sensor 41 (see Fig. 2) for detecting a rotation angle of crankshaft 25.

It is noted that engine 2 used in this embodiment is the same as that of the embodiment above and therefore, the description of the configuration of each part will not be repeated.

Alternator 107 is coupled to crankshaft 25 of engine 2, for example, through a belt or the like and generates power by means of the rotation of engine 2. The power generated at alternator 107 is accumulated in battery 108.

Starter motor 106 is driven to rotate by the power supplied from battery 108. The output shaft of starter motor 106 and crankshaft 25 of engine 2 are coupled to each other through pulleys 112, 113 and a belt 111, so that the driving force (rotation power) of starter motor 106 can be transmitted to crankshaft 25 of engine 2, and this transmitted driving force causes crankshaft 25 of engine 2 to rotate. The driving of starter motor 106 is controlled by ECU 150.

ECU 150 performs a variety of control of engine 2 including the engine stop control and start control based on outputs from crank position sensor 41, throttle position sensor 42, vehicle speed sensor 43, accelerator position sensor 44, shift position sensor 45, brake pedal sensor 46, and a variety of not-shown sensors such as a water temperature sensor, an air flow meter, an intake temperature sensor, and an O₂ sensor.

Then, also in this embodiment, ECU 150 performs the engine stop control through the similar process as in the flowchart shown in Fig. 3 (strop control routine) to stop cylinder #4 of engine 2 in a compression stroke.

However, since this embodiment is intended for eco-run cars, of the engine stop conditions at step ST1 in the flowchart of Fig. 3, the stop condition unique to hybrid cars, for example, "a condition that the engine is stopped during vehicle travel" or the like, is not included, and, for example, "the idling stop condition", "ignition switch (not shown) OFF", and the like are set as the engine stop condition. Furthermore, in the embodiment described previously, a motor generator is used to perform each process of "decreasing the engine rotational speed" at step ST2 and "forcibly driving the crankshaft" at step ST5 in the flowchart of Fig. 3. However, this embodiment is different in that starter motor 106 is used to perform each process of "decrease the engine rotational speed" and "forcibly driving the crankshaft''.

In addition, ECU 150 performs the start control of engine 2 through a similar process as in the flowchart of Fig. 5 (start control routine), so that cylinder #4 positioned closest to transmission 103 is set as a cylinder initially subjected to fuel injection and ignition at the time of engine start.

However, since this embodiment is intended for eco-run cars, of the engine start conditions at step ST11 in the flowchart of Fig. 5, the start condition unique to hybrid cars, for example, "a condition that engine 2 is started during vehicle travel (travel only with the driving force of motor generator 3)" or the like is not included, and, for example, "releasing pressing of the brake pedal (brake pedal sensor 46 is OFF)", "ignition switch ON", and the like are set as the engine start conditions. Furthermore, although the embodiment above uses a motor generator for "cranking at the time of engine start" at step ST12, the present embodiment is different in that it uses starter motor 106 in cranking at the time of engine start.

As described above, also in this embodiment, in stopping engine 2, among cylinders #1-#4 of engine 2, cylinder #4 arranged at a position closest the transmission 103 can be stopped in a compression stroke, so that the compression vibration at the time of cranking in the next starting can be reduced. Furthermore, cylinder #4 arranged at a position closest to transmission 103 is set as a cylinder initially subjected to fuel injection and ignition at the time of starting of engine 2, so that vibration at the time of initial explosion can also be reduced.

It is noted that although, in the foregoing embodiments, the present invention is applied to hybrid cars or eco-run cars, by way of example, the present invention is not limited thereto. The present invention is applicable to a normal car provided only with an engine as a driving source and not performing idling stop control. In this case, ECU for controlling an engine may perform the flowcharts in Fig. 3 and Fig. 5 where the engine stop condition is "ignition switch OFF" only and the engine start condition is "ignition ON" only.

In the foregoing embodiments, the present invention is applied to FR cars (Front engine Rear drive cars) having an engine and a transmission arranged along the longitudinal direction of the car, by way of example. However, the present invention is not limited thereto and is applicable to FF cars (Front engine Front drive cars) of east-west layout (transverse engine) or the like having an engine and a transmission arranged in the lateral direction of the car.

In the forgoing embodiments, the present invention is applied to the stop control for four-cylinder gasoline engines, by way of example. However, the present invention is not limited thereto and is also applicable to the stop control for other multi-cylinder gasoline engines having any number of cylinders, for example, such as six-cylinder gasoline engines. Furthermore, the present invention is also applicable to the strop control for V-shaped multi-cylinder gasoline engines and east-west multi-cylinder gasoline engines.

In addition, the present invention is not limited to gasoline engines and is applicable to the stop control for engines ignited with any other fuel such as LPG (Liquefied Petroleum Gas) or LNG (Liquefied Natural Gas) or diesel engines. The present invention is also applicable to the stop control for in-cylinder direct injection engines.

It should be understood that the embodiments disclosed herein are illustrative rather than limitative in all aspects. The scope of the present invention is shown not in the foregoing description but in the claims, and all the modifications within the meaning and range of equivalencies of the claims are intended to be embraced herein.

## Claims

1. A control apparatus for an internal combustion engine for controlling a multi-cylinder internal combustion engine having a transmission coupled thereto, **characterized by** comprising a stop control unit controlling an engine stop such that, among a plurality of cylinders of said internal combustion engine, a cylinder arranged at a position close to said transmission halts in a compression stroke, in stopping said internal combustion engine.

2. The control apparatus for an internal combustion engine according to claim 1, wherein, in stopping said internal combustion engine, said stop control unit causes the cylinder arranged at a position close to said transmission to stop in a compression stroke by forcibly driving a crankshaft of said internal combustion engine with an electric motor.

3. The control apparatus for an internal combustion engine according to claim 2, wherein said stop control unit calculates a remaining rotation angle required for the cylinder arranged at a position close to said transmission to halt in a compression stroke, at a point when rotation speed of said internal combustion engine becomes less than a prescribed value, and controls driving of said electric motor based on a calculated value of the remaining rotation angle.

4. The control apparatus for an internal combustion engine according to claim 1, **characterized by** further comprising a start control unit controlling ignition of the internal combustion engine such that ignition is started from the cylinder arranged at a position close to said transmission, in starting said internal combustion engine.

5. The control apparatus for an internal combustion engine according to claim 4, wherein said start control unit controls a timing at which a throttle valve arranged in an intake passage of the internal combustion engine is opened such that fresh air is introduced into the cylinder arranged at a position close to said transmission, in starting said internal combustion engine.

6. The control apparatus for an internal combustion engine according to claim 5, **characterized in that** the fresh air introduced into the cylinder arranged at a position close to said transmission is in an amount of air according to a required driving force.

7. An automobile comprising the control apparatus for an internal combustion engine according to any of claims 1-6, **characterized in that** an engine stop is performed by said stop control unit when an internal combustion engine stop condition is met.

8. A control apparatus for an internal combustion engine for controlling a multi-cylinder internal combustion engine having a transmission coupled thereto, **characterized by** comprising stop control means for controlling an engine stop such that, among a plurality of cylinders of the internal combustion engine, a cylinder arranged at a position close to said transmission halts in a compression stroke, in stopping said internal combustion engine.

9. The control apparatus for an internal combustion engine according to claim 8, wherein said stop control means includes means for stopping the cylinder arranged at a position close to said transmission in a compression stroke by forcibly driving a crankshaft of said internal combustion engine with an electric motor, in stopping said internal combustion engine.

10. The control apparatus for an internal combustion engine according to claim 9, wherein said stop control means includes means for calculating a remaining rotation angle required for the cylinder arranged at a position close to said transmission to halt in a compression stroke, at a point when rotation speed of said internal combustion engine becomes less then a prescribed value, and based on a calculated value of the remaining rotation angle, controlling driving of said electric motor.

11. The control apparatus for an internal combustion engine according to claim 8, **characterized by** further comprising start control means for controlling ignition of the internal combustion engine such that ignition is started from the cylinder arranged at a position close to said transmission, in starting said internal combustion engine.

12. The control apparatus for an internal combustion engine according to claim 11, wherein said start control means includes means for controlling a timing at which a throttle valve arranged in an intake passage of the internal combustion engine is opened such that fresh air is introduced into the cylinder arranged at a position close to said transmission, in starting said internal combustion engine.

13. The control apparatus for an internal combustion engine according to claim 12, **characterized in that** fresh air introduced into the cylinder arranged at a position close to said transmission is in an amount of air according to a required driving force.

14. An automobile comprising the control apparatus for an internal combustion engine according to any of claims 8-13, **characterized in that** an engine stop is performed by said stop control means when an internal combustion engine stop condition is met.
